# EUROPEAN PATENT SPECIFICATION

(11) **EP 1 091 580 B1**
(45) Date of publication and mention of the grant of the patent: **07.06.2006**
(21) Application number: 00127230.1
(22) Date of filing: 06.03.1995
(51) Int. Cl.: H04N 7/01

(54) **Video signal processing for identifying the phase of video material resulting from a 3:2 pulldown process**
Fernsehsignalbearbeitung zur Erkennung der Phase eines Videoinhalts, der aus einem 3:2 Pull-Down-Verfahren gewonnen wurde
Traitement de signaux vidéo pour l'identification de la phase du contenu vidéo dérivé d'une technique pull-down 3:2

(30) Priority: 04.03.1994 GB 9404190
(43) Date of publication of application: 11.04.2001
(62) Divisional of application: 95910619.6
(73) Proprietor: Snell & Wilcox Limited, Havant, Hampshire PO9 2PE (GB)
(72) Inventor: Thomson, Rod, Christchurch, NZ (GB)
(74) Representative: Garratt, Peter Douglas

(56) References cited:
- GB-A- 2 240 232
- US-A- 4 982 280
- US-A- 5 255 091

## Description

This invention relates to video signal processing.

It is well known that a variety of video processes which are optimised for video material having a particular temporal sampling rate, can function differently - and usually less well - with video material transferred from film or converted in some other way from an original temporal sampling rate which was lower. If the origins of the video material which is to be processed are known, the process can be appropriately optimised at the outset. A difficulty arises where the origins of the material are unknown or where the video material is a compilation of material having different origins. Video material which originated from film (whether 24 Hz, 25 Hz or 30 Hz), slow motion replays and animation will usually have repeating images which will lead to sub-optimal performance in particular video processes, unless correctly identified.

In converting from 24 Hz film to 60 Hz NTSC, it is usual to employ the well known 3:2 pulldown sequence. For subsequent video processing, it is desirable not only to detect the character of the film originating material but also to identify the precise phase in the field duplicating and reordering sequence that arises from the 3:2 pulldown process.

Apparatus which detects the phase of the 3:2 pulldown sequence already exists and reference is directed for example to WO-A-91 06182, or to GB-A- 2 240 232 Known approaches generally compare fields from successive video frames to derive a field difference signal which will be expected to be small in the case of duplicate fields added in the 3:2 pulldown. A logic arrangement is then provided to identify a repeating pattern in the sequence of field difference signals.

It is an object of the present invention to provide an alternative method for identifying the phase of the field duplicating and reordering sequence in video material resulting from a 3:2 pulldown process.

Accordingly, the present invention consists in a method for identifying the phase of the field duplicating and reordering sequence in video material resulting from a 3:2 pulldown process, comprising the steps of generating motion vectors; deriving a motion parameter from said motion vectors; storing a sequence of measured motion parameters for successive fields; comparing the pattern of motion parameters with known patterns associated respectively with different phases of the field duplicating and reordering sequence and selecting the phase providing the closest match.

Preferably, the step of deriving a motion parameter comprises identifying a plurality of motion vectors associated with respective regions of the image and taking the average magnitude of the motion vectors.

This invention can operate using any of a wide variety of known techniques for splitting a picture into blocks and measuring a motion vector between these blocks in successive images. The average vector magnitude is calculated from the motion vectors measured between every successive image.

The present invention consists, in a further aspect, in apparatus for identifying the phase of the field duplicating and reordering sequence in video material resulting from a 3:2 pulldown process, comprising a motion estimator for generating motion vectors; means for deriving a motion parameter from said motion vectors; means for storing a sequence of motion parameters for successive fields; means for comparing the pattern of motion parameters with known patterns associated respectively with different phases of the field duplicating and reordering sequence and means selecting the phase providing the closest match.

The present invention will now be described by way of example with reference to the accompanying drawings in which:-
Figure 1 is a block diagram illustrating apparatus according to one aspect of the present invention, for distinguishing between video originated and film originated material;
Figure 2 is a block diagram illustrating apparatus according to a further aspect of this invention for identifying the phase of a 3:2 pulldown sequence and Figure 3 is a block diagram illustrating, in more detail, one component of the apparatus of Figure 2.

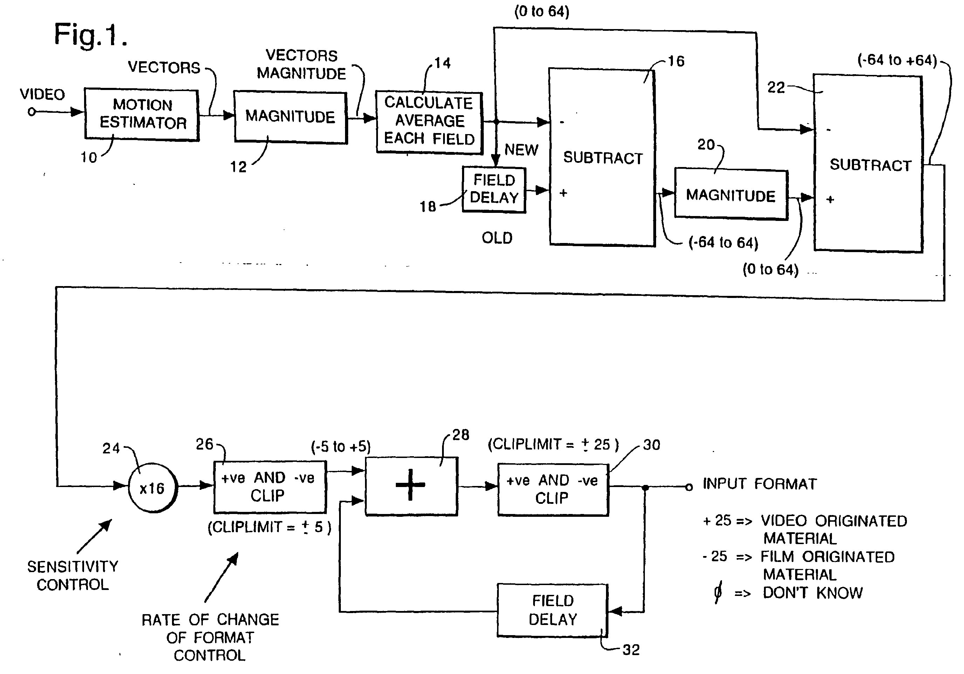

Referring initially to Figure 1, video material passes to a motion estimator 10 which generates motion vectors. The motion estimator can take a wide variety of known forms with a particularly suitable technique being that of phase correlation as disclosed, for example, in GB-B-2 188 510. The magnitude of the motion vectors derived by the motion estimator 10 is calculated in block 12 and these magnitudes are averaged for each field in block 14. The field-averaged vector magnitude, which can be regarded as a motion parameter for that field, is taken directly as one input to subtracter 16 and via a field delay 18 to form the other input of the subtracter. The output of the subtracter, which is then the difference in the motion parameter for successive fields, is then passed through block 20 which serves to extract the magnitude. A further subtracter 22 takes as its positive input, the current motion parameter and as its negative input the magnitude of the difference signal.

As has been previously noted, a tendency to positive results in the subtracter 22 will be indicative of video originating material whilst a tendency towards negative results will be indicative of film originating material. The remainder of the circuit shown in Figure 1 is concerned with identifying these tendencies in a manner which is reliable, which responds in a proper manner to cuts between film originated and video originated material and which deals in a sensible manner with picture material having finite but unusually low movement.

Thus, the output of subtracter 22 passes through multiplier 24 performing a x 16 operation. As will be described subsequently, the choice of coefficient for the multiplier affords a degree of sensitivity control for process. The output of the multiplier 24 passes to block 26 which serves to clip the signal in both positive and negative senses. In this case, the clipping occurs at ± 5 although, as will be described, the choice of clip limits provides a measure of control over the rate at which apparent changes between video originated and film originated material are detected. The clip signal from block 26 is accumulated and further clipped in an arrangement which comprises an adder 28, a clipper 30 and a field delay 32. The output of clipper 26 passes through adder 28 to a further clipper 30 which has a clip limit of ± 25. The adder 28 receives as its second input the output of the clipper 30 passed through the field delay 32.

In the case of video originating material having constant motion, the differential vector magnitude will be zero and, with the gain afforded by multiplier 24, the output from clipper 26 will be continuously + 5. It will be seen that after 5 cycles, the output of the clipper 30 will reach and will be held at the positive clip limit of + 25. In the more normal case in which there is varying motion, the motion vector differential will be non-zero but nonetheless smaller on average than the actual motion vector magnitude. The sensitivity provided by multiplier 24 is selected so that in most cases, the output of clipper 26 remains at the positive clip limit so that a rate of change of 5 cycles, (from the zero condition) still applies. In the case of very small motion with, for example, "talking heads" picture material, the high gain of multiplier 24 ensures that information regarding the motion is still made use of. The clip limit in block 26 may not be reached and the rate of change of the detector output will therefore be slow.

In the case of film originating material, the output from subtracter 22 will be expected to be zero or negative. In an analogous manner, the first clip limit of - 5 and the accumulated clip limit of - 25 will apply and an output of -25 can be identified with film originating material. It will be noted that an output of zero is taken simply to mean "don't know".

The five-fold relationship between the clip limits of block 26 and 30 have been selected to govern the delay after which the detector switches between video originating and film originating material in the "ideal" case of a cut between constant motion film and constant motion video. If a longer delay is appropriate, a ten-fold or greater differential between the two clip limits can be employed.

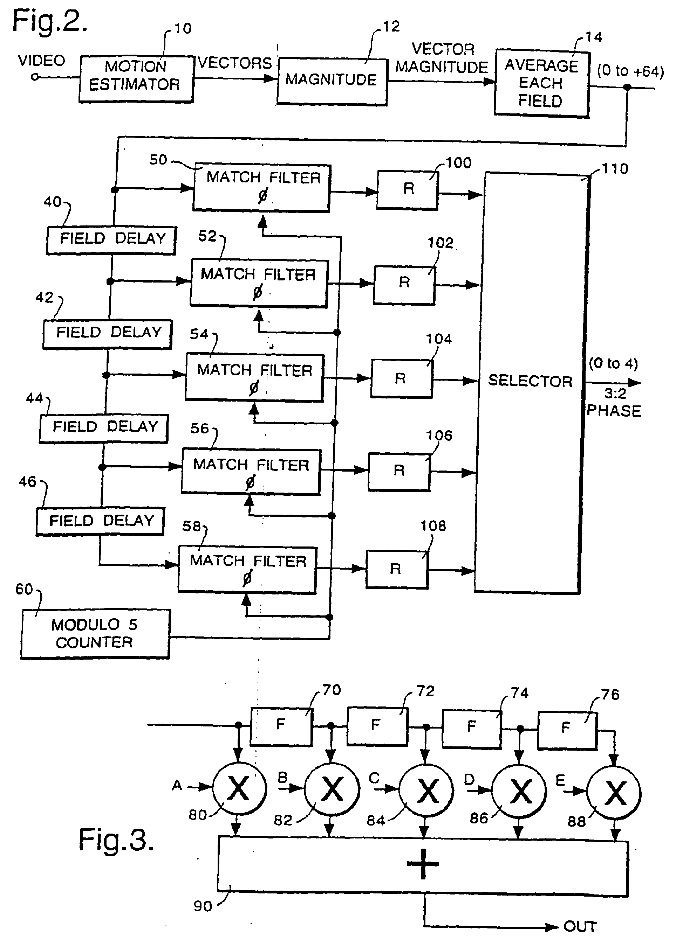

Turning now to Figures 2 and 3, there is shown a further embodiment of the present invention which is capable of identifying the phase of the 3:2 sequence in 60 Hz NTSC material originated on film and subjected to a 3:2 pulldown. Certain components are shared in common with the embodiment of Figure 1. These components have the same reference numerals and will not be described in any more detail.

The output from block 14, which is a motion parameter in the form of an average motion vector for the field, is taken to a chain of field delays 40-46 These feed in turn an array of match filters 50-58, clocked at field rate by means of a modulo 5 counter 60.

Referring now to Figure 3, there is shown in more detail the structure of each match filter 50-58. It will be seen that the input to the match filter is taken to a chain of field delays 70-76 which feed multipliers 80-88. The coefficients A to E supplied to these multipliers, vary in the clock cycle as follows:-

| | **A** | **B** | **C** | **D** | **E** |
|---|---|---|---|---|---|
| 0 | +1 | -1 | +1 | -1 | -1 |
| 1 | -1 | +1 | -1 | +1 | -1 |
| 2 | -1 | -1 | +1 | -1 | +1 |
| 3 | +1 | -1 | -1 | +1 | -1 |
| 4 | -1 | +1 | +1 | -1 | +1 |

The output of the multipliers 80-88 are taken through adder 90 which generates the output for the match filter.

Returning to Figure 2, the outputs of the match filters are taken through respective recursive filters 100-108 which generate the five inputs for selector 110. The function of this selector is to pick the largest output from the recursive filters 100-108. In the ideal case, only one output will be positive. There is preferably hysteresis built into the selector 110 so that short term shifts in the ranking of the inputs, arising from noise, are ignored. The coefficient sequence of the selected match filter indicates the field sequence of the input video.

It should be understood that this invention has been described by way of example and a wide variety of modifications are possible without departing from the scope of the invention. Whilst the example has been taken of 3:2 pulldown, the method of the invention is capable of, more generally, detecting the residual effect of a past conversion from a lower temporal sampling rate involving the repetition of images.

## Claims

1. A method for identifying the phase of the field duplicating and reordering sequence in video material resulting from a 3:2 pulldown process, comprising the steps of generating motion vectors; deriving a motion parameter from said motion vectors; storing a sequence of measured motion parameters for successive fields; comparing the pattern of motion parameters with known patterns associated respectively with different phases of the field duplicating and reordering sequence and selecting the phase providing the closest match.

2. A method according to Claim 1, wherein the step of deriving a motion parameter comprises identifying a plurality of motion vectors associated with respective regions of the image and taking the average magnitude of the motion vectors.

3. Apparatus for identifying the phase of the field duplicating and reordering sequence in video material resulting from a 3:2 pulldown process, comprising a motion estimator (10) for generating motion vectors; means (12, 14) for deriving a motion parameter from said motion vectors; means (40-46) for storing a sequence of motion parameters for successive fields; means (50-58, 100-108) for comparing the pattern of motion parameters with known patterns associated respectively with different phases of the field duplicating and reordering sequence and means (110) selecting the phase providing the closest match.

4. Apparatus according to Claim 3, wherein said means for comparing the pattern of motion parameters with known patterns associated respectively with different phases of the field duplicating and reordering sequence comprises five match filters (50-58) receiving said sequence of measured motion parameters delayed by one field interval from one match filter to the next.

## Patentansprüche

1. Verfahren zum Identifizieren der Phase der Teilbildverdoppelungs- und -umordnungssequenz in einem Videomaterial, das sich aus einem 3:2-Reduzierungsprozess ergibt, das die folgenden Schritte umfasst. Erzeugen von Bewegungsvektoren; Ableiten eines Bewegungsparameters aus den Bewegungsvektoren; Speichern einer Folge gemessener Bewegungsparameter für aufeinander folgende Teilbilder; Vergleichen des Musters von Bewegungsparametern mit bekannten Mustern, die unterschiedlichen Phasen der Teilbildverdoppelungs- und -umordnungssequenz zugeordnet sind, und Auswählen der Phase, die die beste Übereinstimmung ergibt.

2. Verfahren nach Anspruch 1, bei der der Schritt des Ableitens eines Bewegungsparameters das Identifizieren mehrerer Bewegungsvektoren, die jeweiligen Bereichen des Bildes zugeordnet sind, und das Bilden des Mittelwerts für die Größe der Bewegungsvektoren umfasst.

3. Vorrichtung zum Identifizieren der Phase der Teilbildverdoppelungs- und -umordnungssequenz in einem Videomaterial, das sich aus einem 3:2-Reduzierungsprozess ergibt, die umfasst: eine Bewegungsschätzeinrichtung (10), um Bewegungsvektoren zu erzeugen; Mittel (12, 14), um einen Bewegungsparameter aus den gewegungsvektoren abzuleiten; Mittel (40-46), um eine Folge von Bewegungsparametern für aufeinander folgende Teilbilder zu speichern; Mittel (50-58, 100-108), um das Muster von Bewegungsparametern mit bekannten Mustern, die jeweils unterschiedlichen Phasen der Teilbildverdoppelungs- und -umordnungssequenz zugeordnet sind, zu vergleichen, und Mittel (110), um die die beste Übereinstimmung ergebende Phase auszuwählen.

4. Vorrichtung nach Anspruch 3, bei der die Mittel zum Vergleichen des Musters von Bewegungsvektoren mit bekannten Mustern, die jeweils unterschiedlichen Phasen der Teilbildverdoppelungs- und -umordnungssequenz zugeordnet sind, fünf Übereinstimmungsfilter (50-58) umfassen, die die Folge gemessener Bewegungsvektoren empfangen, die von einem Übereinstimmungsfilter zum nächsten um ein Teilbildintervall verzögert sind.

## Revendications

1. Procédé pour identifier la phase de la séquence de réagencement et de duplication de champs dans un contenu vidéo résultant d'une technique d'ajustement 3:2, comprenant les étapes de production des vecteurs de mouvement ; de dérivation d'un paramètre de mouvement à partir desdits vecteurs de mouvement ; de mémorisation d'une séquence de paramètres de mouvements mesurés pour des champs successifs ; de comparaison du motif des paramètres de mouvement avec des motifs connus associés respectivement à différentes phases de la séquence de réagencement et de duplication de champs, et de sélection de la phase fournissant la correspondance la plus proche.

2. Procédé selon la revendication 1, dans lequel l'étape de dérivation d'un paramètre de mouvement comprend l'identification d'une pluralité de vecteurs de mouvement associés à des régions respectives de l'image et la prise en compte de la grandeur moyenne des vecteurs de mouvement.

3. Appareil pour identifier la phase de la séquence de réagencement et de duplication de champs dans un contenu vidéo résultant d'un procédé d'ajustement 3:2, comprenant un estimateur de mouvement (10) pour générer des vecteurs de mouvement ; des moyens (12, 14) pour dériver un paramètre de mouvement à partir desdits vecteurs de mouvement ; des moyens (40-46) pour mémoriser une séquence de paramètres de mouvement pour des champs successifs ; des moyens (50-58, 100-108) pour comparer le motif des paramètres de mouvement avec des motifs connus associés respectivement à différentes phases de la séquence de réagencement et de duplication de champ et des moyens (110) sélectionnant la phase fournissant la correspondance la plus proche.

4. Appareil selon la revendication 3, dans lequel lesdits moyens destinés à comparer le motif des paramètres de mouvement avec des motifs connus associés respectivement à différentes phases de la séquence de réagencement et de duplication de champs comprennent cinq filtres de correspondance (50-58) recevant ladite séquence de paramètres de mouvement mesurés, retardés d'un intervalle de champ d'un filtre de correspondance au filtre de correspondance suivant.
